Europäisches Patentamt

European Patent Office

Office européen des brevets

(19)

(11) Publication number: **0 194 233**

**A2**

(12) **EUROPEAN PATENT APPLICATION**

(21) Application number: 86830022.9

(22) Date of filing: 29.01.86

(51) Int. Cl.⁴: **B65H 67/06** , B65G 61/00 , B66C 1/54 , B66C 1/42 , B65H 49/38

(30) Priority: 01.02.85 IT 932685

(43) Date of publication of application:
10.09.86 Bulletin 86/37

(84) Designated Contracting States:
BE DE FR GB

(71) Applicant: GUALCHIERANI & C. S.P.A.
Viale Vittorio Veneto 68
I-50047 Prato Firenze(IT)

(72) Inventor: Gualchierani, Sergio
Via Fossi, 10
I-50047 Prato Firenze(IT)

(74) Representative: Mannucci, Gianfranco, Dott.-Ing.
Ufficio Tecnico Ing. A. Mannucci Via della Scala 4
I-50123 Firenze(IT)

(54) **Apparatus for forming layers of textile roving coils, with a hole at the centre, on a carriage and for superimposing said layers in containers.**

(57) An apparatus for handling textile roving coils (5), with a hole at the centre, to pile them up in a container (71) for successive handlings, comprises: a rod (43) to receive, in a usually horizontal position, a coil (5) expelled from a rod (3) of the coils forming machine; a means (25) for the lift and transfer in a vertical, downwardly directed position of said rod (43) with the coil (5) being held by friction, said means (25) being capable of assuming several positions equidistant between them; a carriage (7) -in the lower part -divided into compartments (7C) and movable step by step in longitudinal direction to cause the axis of a compartment (7C) to coincide with the axis of the vertically disposed rod (43); a means (63, 65) for the ejection of the coil (5) in order to place it in the underlying carriage compartment (7C); means for translating said carriage (7), with a coil (5) in all its compartments (7C), below a vertically movable equipment or carrier (70) supplied with grip means (77A, 77B) for the simultaneous lifting of the coils (5); and means to move said mobile carrier (70) above a stowage container (71) for storing said coils (5) therein.

FIG.1

# "APPARATUS FOR FORMING LAYERS OF TEXTILE ROVING COILS, WITH A HOLE AT THE CENTRE, ON A CARRIAGE AND FOR SUPERIMPOSING SAID LAYERS IN CONTAINERS"

The invention relates to an automatic apparatus for handling textile roving coils, with a hole at the centre, produced by a coils winding machine and made available on a rod from which they are expelled by a suitable means. By means of the apparatus of the invention, the coils are arranged in one or more layers on a carriage from which they are picked up afterwards by a lift carrier, below which the carriage moves; said carrier provides for placing the coils in superimposed layers within a stowage container which can thus be transferred up to the next machine, like a press, for successive coil handlings.

According to the invention, an apparatus for handling textile roving coils, with a hole at the centre, so as to pile them up inside a container for successive handlings, like pressing and packing, comprises in combination: a rod means to receive, in a first position, a coil expelled from a rod of the coils forming machine; being abutted with it; a means for lifting and transferring the rod means with the coil held by friction, in a second vertical downwardly directed postion, said means being able to be transversally moved to take up a plurality of positions equidistant between them; below said lifting means, a carriage divided into a number of compartments arranged in side by side parallel rows, which is movable step by step in longitudinal direction to make the axis of one of the compartments of one row correspond with the axis of the vertically disposed rod means; means for the ejection of the coil from the rod means to place the coil in the underlying carriage compartment; means to translate said carriage, with a coil in each of its compartments, below a vertically movable carrier supplied with grip means for the simultaneous lift of the coils; and carriage means to move said mobile carrier above a stowage container for storing said coils therein.

Advantageously, the displacements of the means for the lift and displacement of the rod means as well as the step-by-step movements of the carriage are programmed for the placement of one coil in each compartment so as to give rise to complete layers of coils.

An advantageous improvement of the invention consists substantially in that a support, on which said rod is mounted. for rotation, is provided with stems apt to encircle the coil and also apt to draw the "small tail" near the external coil turns in order to make it adhere thereto.

The control of the rod rotation will be programmed so as to locate the small tail, at the rotation end, every time at such a position that when the coils are positioned inside the carriage, all "small tails" are substantially placed against the inner columns of the carriage bottom.

Advantageously, the stems may be shaped with bevelled i.e. invitation ends.

The stem positions may be adjustable for their positioning on a plate of the support of the rotating rod that engages the coil.

Inside the rod supporting the coils the insertion is also provided of a small piston having a needle to retain the coil in vertical position during its lowering towards the carriage.

The invention will be better understood by a reading of the following description in conjunction with the accompanying drawing which shows a practical, non limitative exemplification of the invention itself. In the drawing:

Fig. 1 shows an elevation view of the apparatus according to the invention;

Fig. 2 shows a view taken on line II-II of Fig. 1;

Fig. 3 shows, schematically, the device for the lifting of the coils from the carriage, in the raised position;

Fig. 4 shows a plan view of said carriage;

Fig. 5, 6 and 7 show respective operative .phases for the withdrawal of the coils from the carriage in order to place them in a container;

Fig. 8 shows a plan view of the bottom of a compartshy ment of said container;

Figs. 9 and 10 show a side view and an axial view of the device carrying the rod which is intended to receive the coil according to an improved, modified embodiment; and

Fig. 11 shows a plan view of the carriage with coils, provided with inner pillars or columns for the centering and retention of coils.

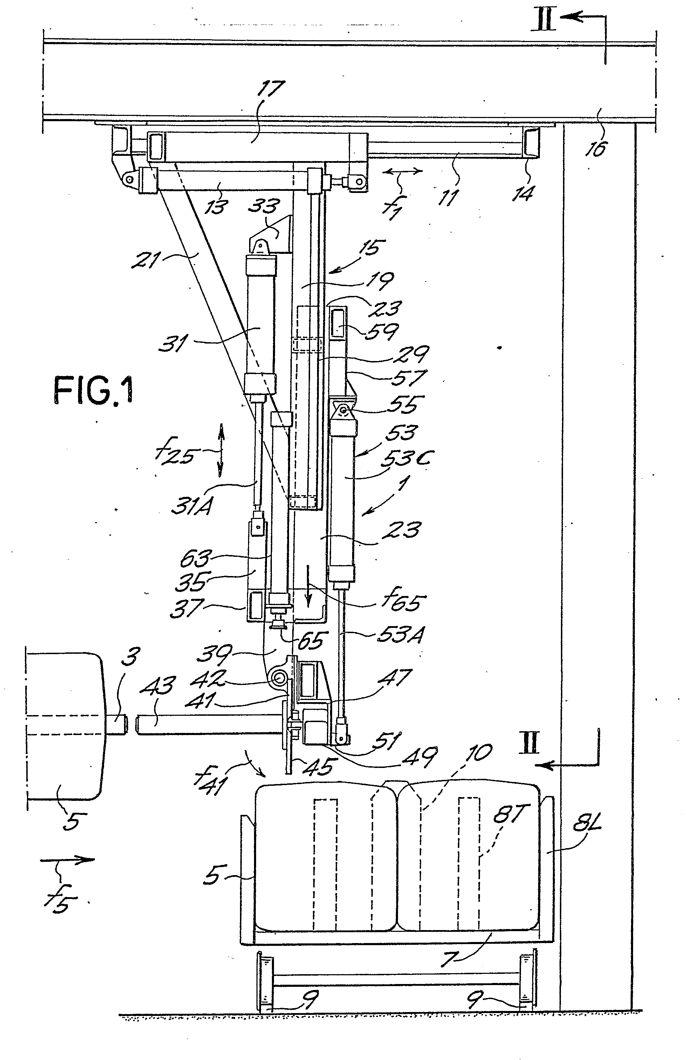

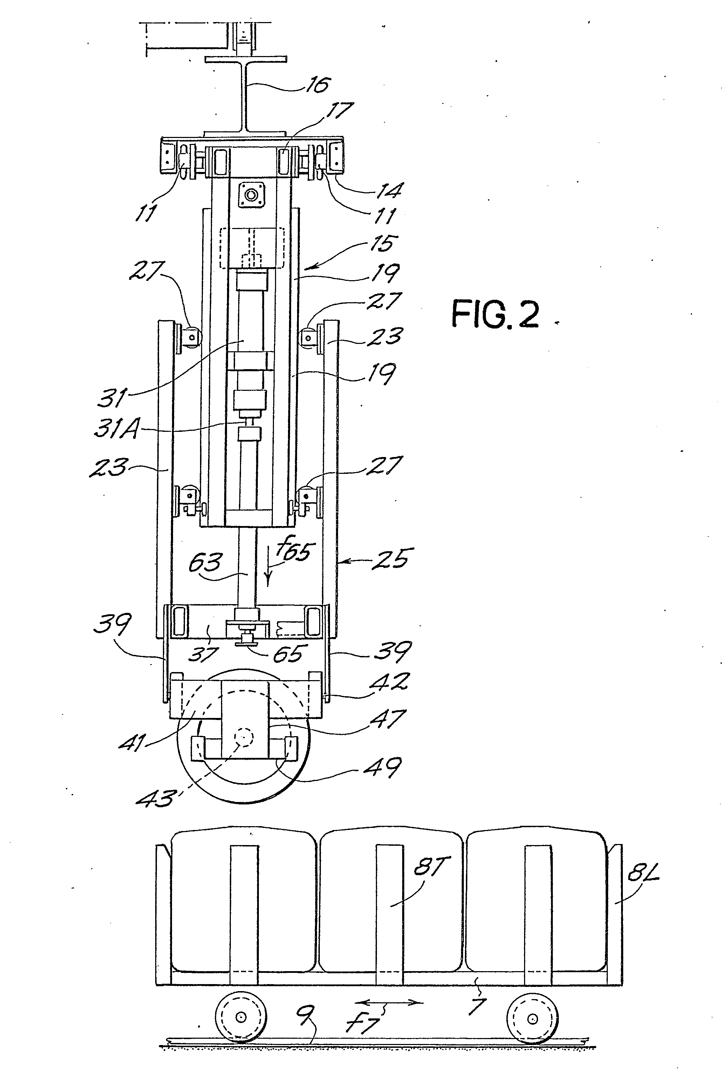

As shown in Figs. 1 and 2, the apparatus according to the invention comprises a manoeuvring group 1 which receives from the rod 3 of a coils winding machine (not shown) -as these coils are gradually produced -a just formed roving coil 5, with hole, and provides each time to place it in one of the compartments of an underlying carriage 7 which is movable on tracks 9. The displacements of the carriage 7 are provided in a direction at right angle to the plane of Fig. 1 so as to gradually present, under the group 1, respective pairs of compartments 7C for receiving the coils 5. The group 1, in turn, is supported on top by guides 11 upon which it can translate in the two directions of arrow f1 for the action of a cylinder-piston system 13, thereby being able to take up (in the drawing) two end positions, either above a first compartment of one of said pairs, as shown in Fig. 1, or above the second compartment, respectively. The possible displacements, according to arrow f1, of the group 1 and of carriage 7 -said displacements being controlled by a suitable programmer -allow the group ·1 to place a coil in each of compartments 7C of the carriage 7. The guides 11 make part of a structure 14 fixed below a beam 16 overhanging the group 1.

The group 1 comprises a structure 15, fixed in vertical direction, which is made up of an upper frame 17 sliding on slides 11, of vertical and parallel stanchions 19 as well as of an inclined stiffening strut 21. In the example of the drawing, the fixed structure 15 results (Fig.2) on the inside of a pair of stanchions 23 of a mobile structure 25. The mobile structure 25 may be vertically lifted and lowered in the two directions of arrow f25 respect to the structure 15, on which it is guided (in the drawing) by wheels 27 sliding within the guides 29 of the stanchions 19. The vertically directed transfers of the structure 25 are obtained by means of a cylinder-piston system 31 whose cylinder is fixed to brackets 33 of the structure 15, while the rod 31A is connected to a vertical hanger 35 which projects upwardly from a rectangular, horizontal frame 37 cantilevered fixed on the left (Fig.1) of stanchions 23. On opposite sides of the frame 37, two equal plates 39 are fixed, inside the ends of which, a transversal member 41 is articulated at 42.. The member 41 is so shaped as to pivotally support a rod 43 which projects horizontally, on the left in drawing, from a plate 45; moreover, inside a square-shaped crosspiece 47 of member 41, a rotary cylinder 49 is fixed, which is able to cause the rotation of rod 43. At the back of cylinder 49, a fork 51 is fixed for the articulation of the end of the rod 53A of a cylinder-piston system 53; the upper end of cylinder 53C of said system is articulated at 55 to a vertical hanger 57 projecting downwards of a crosspiece 59 which joins stanchions 23. As can be readily seen from Fig. 1, the cylinder-piston system 53 is able -by rotating the member 41 according to arrow f41 about the articulation 42 -to make the rod 43 assume either the horizontal position of Fig.1, or , as the rod 53A retracts, a vertical downwards position (not shown). To the mobile structure 25 and, more precisely, to the horizontal flange of an angle bar 61 inside the frame 33, a cylinder-piston system 63 is fixed with a disc pusher 65 secured on the end of its rod. Through the action of the system 63, the pusher 65 causes the expulsion from rod 43 of a coil 5 -which has been received by the rod 3 -after the rod 43 has taken its vertical position.

On use, the cycle starts with the expulsion in the direction of arrow f5, from 3, by means of a fork member - (not shown), of the coil 5 formed by said coils winding machine (not shown). In this phase, the mobile structure 25 is in the deepest lowering position, the group 1 finds itself in its left end position (in the drawing) since it has been called back by the cylinder-piston system 13, and the rod 43 is in horizontal position, in alignment with the rod 3 and with its free end juxtaposed thereto. The rod 43 which has a diameter equal to or, preferably, less than rod 3, receives easily the coil 5 which is urge to slip thereon until it results close to plate 45. Owing to the action of the rotary cylinder 49, the rod 43, soon after receiving the coil 5, begins to rotate together with the coil which has, on its skirt, a small tail, that is, the free end of the roving which has been wound. A generally horizontal blowing device (not shown) delivers a strong jet, usually laminar, of compressed air, more or less radially against the skirt of the coil while this rotates; when the tail is struck by the compressed air, it is forced to go between the coil turns in an irreversible way. It is thus obtained that the coil cannot become partially unwound in the next phases.

Through some suitable controls of the programmer of the apparatus, the cylinder-piston system 31 causes at this point the mobile structure 25 to lift, and at the same time, the system 53 makes the member 41 rotate, thus causing the rod 43 to assume the vertical arrangement. These two movements take place simultaneously, giving rise to an appreciable saving of time.

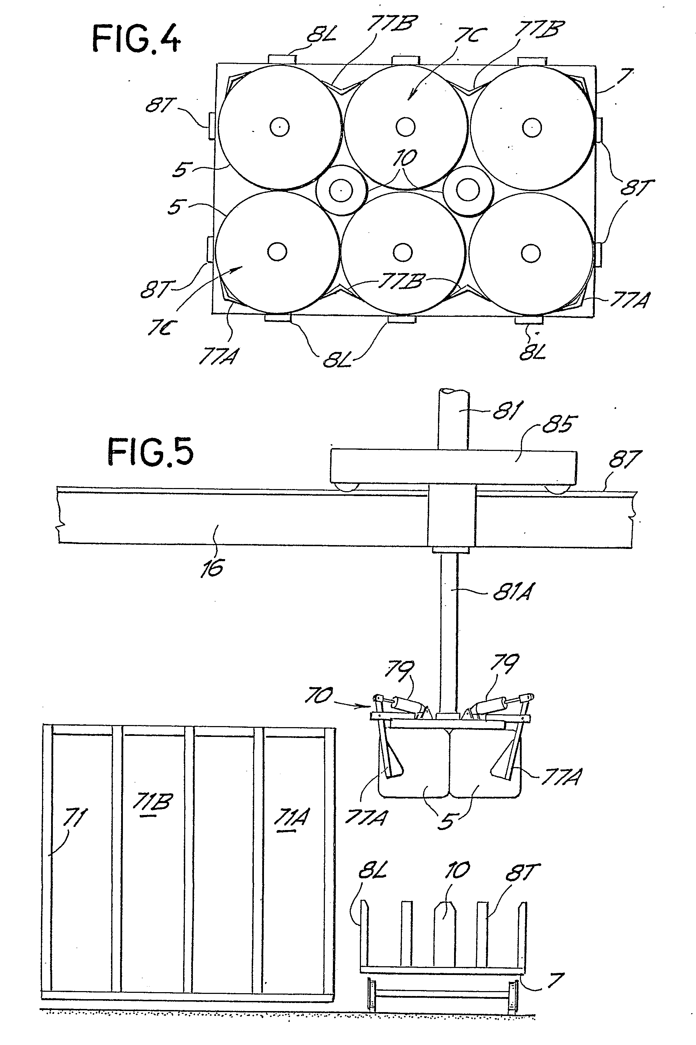

In the condition of Fig.1, assuming that the carriage 7 is completely empty, the arrangement is such that the rod 43, now vertical, coincides with the one of a first compartment on the left (in the drawing) of the carriage 7; in this way, by a suitable lift run of the structure 25, the coil 5, which is kept by friction on the rod 43, overhangs said compartment into which is then placed for the action of the pusher 65 operated by the system 63 in the direction of arrow f65. The compartments 7C of the carriage 7 are defined (Fig.4) by side stanchions 8L and by front stanchions 8T, as well as by inner pillars 10, cylindrical in the drawing. At this point, the pusher 65 retracts, the system 53 causes the member 41 to rotate around the hinge axis 42 and, at the same time, the rod 43 takes up again its horizontal position, while the mobile structure 25 lowers again for the action of the system 31, thereby restoring the condition shown in Fig.1 is restored in which the group 1 presents the rod 43 in alignment with rod 3 and juxtaposed thereto for receiving another coil.

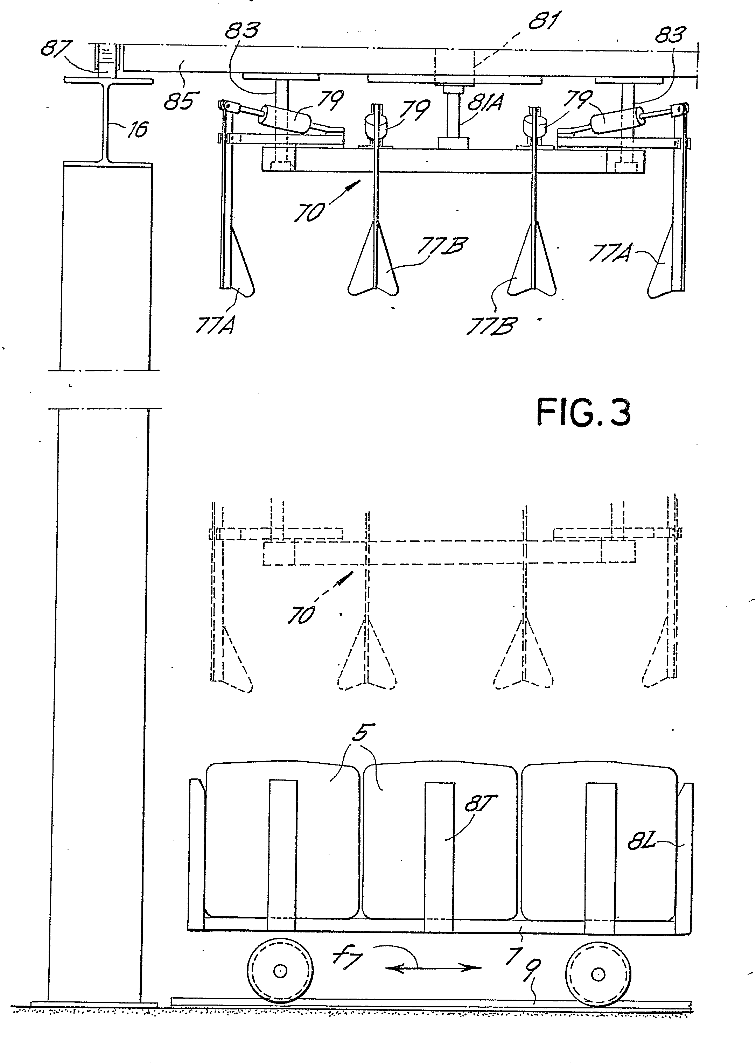

To fill all compartments of carriage 7 (six in the drawing), the cycle is repeated as described hereinbefore, with the difference, however, that, again through programmer controls, in order to place a coil in a compartment on the right of the carriage, the group 1 must be moved -after the lifting of the mobile structure 25 and the rotation of rod 43 - into its right end position (in the drawing) by the system 13; moreover, the carriage must move every time of one step in the direction perpendicular to the plane of Fig.1, that is, in one of the two directions of arrow f7 of Figs. 2 and 3. After one coil has been placed in each of said compartments, giving rise in this way to layer of coils, the carriage 7 is caused to translate (to the left on Fig.3) until it is below a lifting carrier 70. The lifting carrier 70 has the purpose to pick up the set of coils from the carriage 7 to introduce them in a container 71, while the carriage 7 can go back to place itself, empty, below the group 1. The inside of the container 71 may house a number of layers of coils 5 and is constructed with railing walls the stanchions or newels of which are internal to the longitudinal and transversal bars which make up its rectangular mouthpiece. Such stanchions of the container 71 (which may be formed with two compartments 71A and 71B) are disposed more or less in the same positions as the two stanchions 8L and 8T of the carriage, so as to not interfere with the grip means of carrier 70. In a known way, the bottom of the container 71 is pierced with a longitudinal, rectangular, central aperture which joins itself with a plurality of rectangular, transversal apertures thus forming a single shaped aperture for the passage of the presser-piston, also shaped, of a press (not shown). The container 71, after it has been filled, is in fact transferred, by suitable means, under said press, through which pressed bales are obtained in four layers of twentyfour roving coils, for example, like the one indicated by 5.

The lifting carrier 70 comprises a plate 73 having the form of rectangle with bevelled corners, from the sides and bevels of which, hangers 75 with fork-like ends 75E project. With the forks 75E, racket or angled spatula shaped grip means 77A and 77B are articulated, which have, respectively, the concavity inwardly or outwardly directed relative to plate 73. Said members, each driven by a cylinder-piston system 79, can take up an outwards, wide apart disposition for embracing (as the carrier 70 goes down) the set of coils 5, or can close inwardly to firmly grip such set. Fig.3 shows with dotted lines the carrier 70 in lowering condition towards the underlying carriage 7, whereas Fig.4 shows the sections of the angled, spatulas of the grip means 77A and 77B being in contact, for the subsequent grip, with the skirt of the coils 5 for the lifting of the whole set of them.

The lowering and lifting of carrier 70 are obtained by a cylinder-piston system 81 with a rod 81A whose end is fixed to the centre of the plate 73 on which sliding side rods 83 are also fixed for better guiding their movements. The system 81 is secured to a carriage 85 which may translate on run ways 87 supported by longitudinal members or beams 16. In this way, the carrier 70 -whose displacements are controlled by the programmer -may find itself both above the carriage 7 for the withdrawal of the set of coils 5, and above either one compartment or the other of container 71 (flanking the carriage 7) for the introduction of the sets of coils therein.

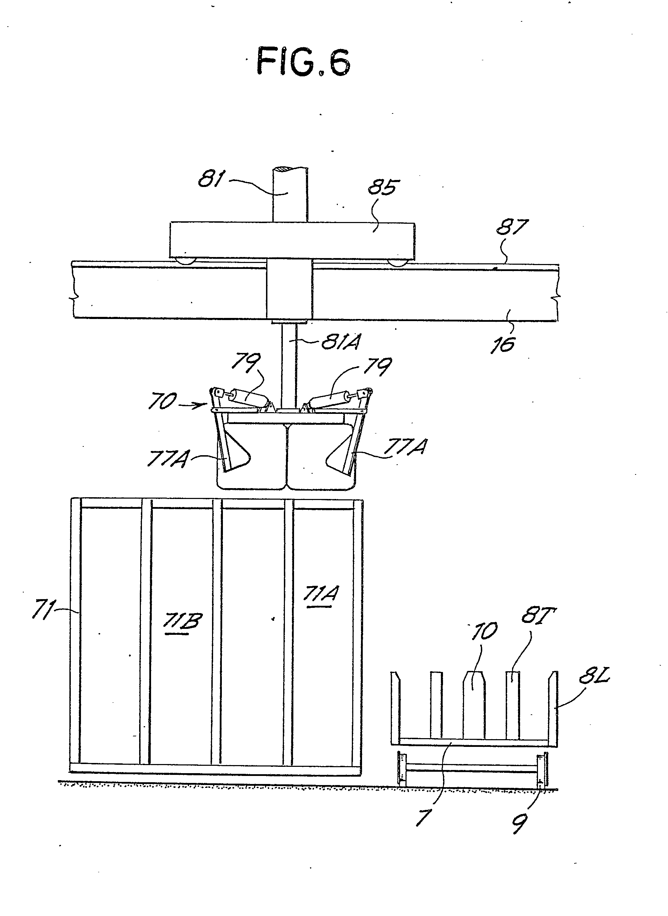

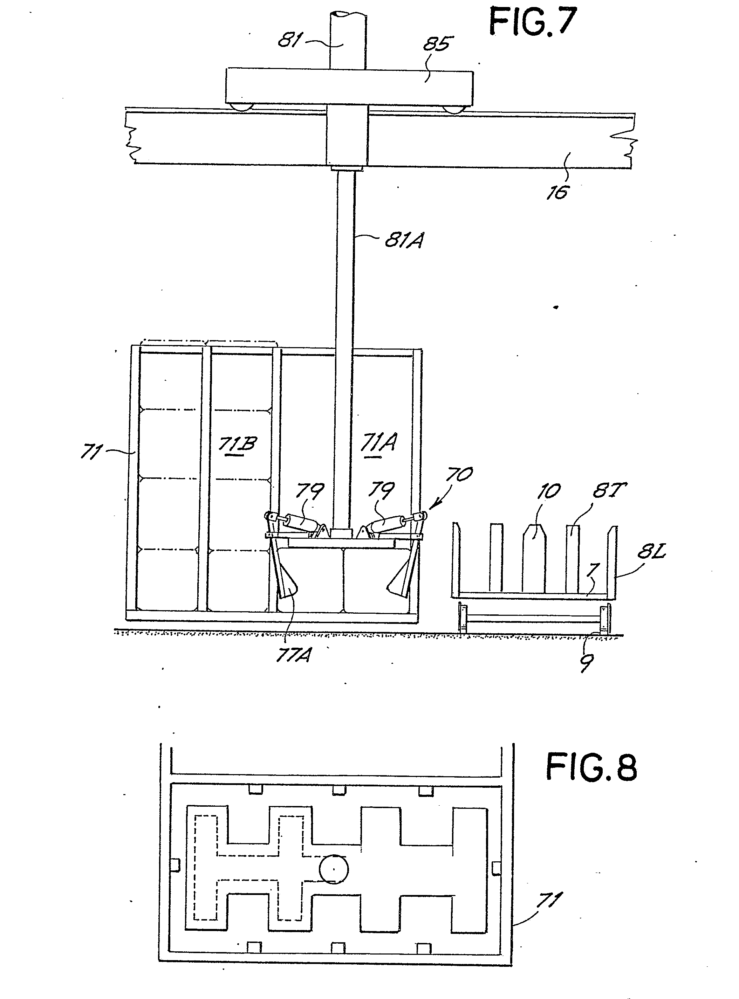

Figs.5, 6 and 7 show, respectively, the operative phases for the transfer of the set of coils 5 from the carriage 7 to the inside of the container 71. In Fig.5, the carrier 70 has picked up and is lifting the set or layer of coils; in Fig.6, the carrier 70 has been further lifted and has moved above the compartment 71A of the container 71; and in Fig.7, the carrier 70 is shown completely lowered for the introduction of the set of coils 5 onto the bottom of said compartment. As is clearly apparent, the compartments 71A and 71B of the container 71 are predisposed to receive several layers of coils 5 with hole (four layers in the example of the drawing), what is obtained through repeated transfers of the carriage 7 which is filled several times. It is also possible to predispose the carriage 7 to receive a number of superimposed layers of coils instead of only one layer as in the drawing. In this case, the group 1 should be capable of assuming more than one lifting position with the rod 43 vertically disposed downwards in order that the end of such rod should not interfere with the coils already placed on carriage 7, but the phases of the working cycle of group 1 would be the same.

The advantages of the apparatus according to the invention are evident: it permits to carry out automatically and continuously the handling of coils with hole 5, starting from their ejection from the rod 3 to their pressing in bales of sets of them arranged in a number of layers. Practically, the apparatus does not require the employment of direct labour and allows, therefore, to achieve an appreciable reduction of the manufacturing cost.

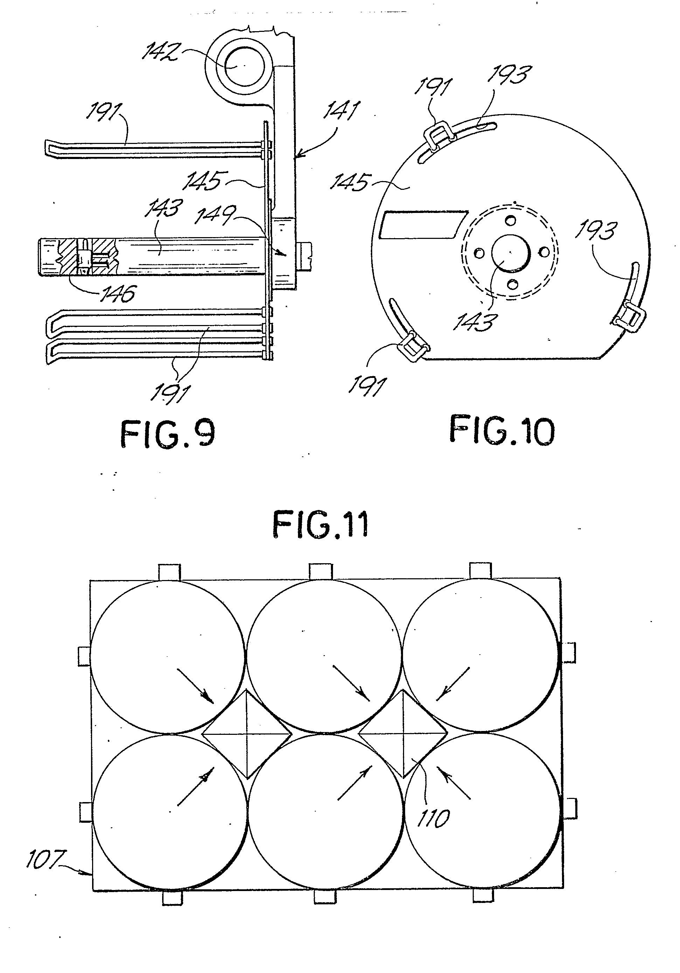

According to Figs. 9 to 11, numeral 141 indicates the member (equivalent to that indicated by 41 in the preceding case) which can be angularly displaced around a horizontal axis so as to move a rod 143 (corresponding to that indicated by 43) from a horizontal condition to a vertical condition, around an articulation 142 (equivalent to that indicated by 42). Numeral 149 indicates a device for rotating the rod 143 around its axis. The rod 143 projects from a plate 145 (analogous to that indicated by 45 of the preceding case) making part of the carrier 141. The plate 145 is provided with perimetral arms 191, which can be suitably adjusted along perimetral slots 193 to be located in a proper position according to the type of production being carried out. These arms 191 have a bevelled i.e. invitation end to facilitate the axial insertion of the coil onto the rod 143, in such a way that arms 191 will adhere onto the periphery of the same coil while slightly pressing it.

Numeral 146 indicates a small piston inserted inside the tube making up the column 143, having a metal needle as a stem; when the coil is inserted onto the rod 143, the needle comes out of the column 143 and slips into the coil to prevent it from sliding downwards when the carrier 141 rotates the group in vertical position. The small piston is pneumatically, double-action operated and is controlled by the program.

The drive means 149 for rotating the rod 143 permits the periphery of the coil to slide with a tangential movement of same coil, which is orthogonal to the development of arms 191. The small tail present at the periphery of the coil is thereby pressed by arms 191 so that to adhere to the outer turns of the coil roving; the small tail projection is thus prevented, but also a too strong anchorage of the small tail in the coil turns is avoided, which is instead caused by the arrangement according to the preceding case.

The programmer which is also responsible of the angular movement of the rod 143 will cause the rotation of same rod and thus of the coil of such an amount that the small tail will be placed, after the angular displacement of the coil, at a definite and desired angular position on the rod 143. The programming causes different rotations of rod 143 depending on the position that each coil being successively treated has to take up within the carriage into which is to be stowed. The programming is so realized that when a coil is received into the carriage 107 (corresponding to that indicated by 7 in the preceding case), the coil small tail shall come to correspond to a column 110 (analogous to the one indicated by 10 of the preceding case), that is, inside the coils set stowed in the carriage. In this embodiment, columns 110 are, advantageously, of prismatic shape and, in particular, of square shape in the cross section so as to have an adhesion surface sufficiently osculating in respect to the periphery of the inserted coil. Accordingly, owing to the above mentioned programming, the small tails -which are in a definite position on the coils presented to rod 143 - will find themselves all inside the coils set stored in the carriage, against the columns 110 of the same carriage and do not result, therefore, outside of said set. When a set of coils is manoeuvred for handling, the tails being compressed towards the inside between a coil and another do not fall downwards thereby avoiding vertical draggings, and the surfaces which come in contact with the outer walls of the coils set do not have small tails disturbing such handling and tending to rise from the coil because of the friction.

Moreover, -during the subsequent formation and packaging stages of the bales within suitable presses for packing -the small tails are all positioned inside said bales, do not tend to roll up because of the rubbing of the walls of the press mobile case onto the outer periphery of the coils.

It is intended that the drawing shows one exemplification given only as a practical demonstration of the invention as same invention may vary in the forms and dispositions without, nevertheless, coming out from the ambit of the idea on which the invention itself is based.

**Claims**

1) An apparatus for handling textile roving coils (5), with a hole at the centre, to pile them up in a container (71) or the like, for successive handlings like pressing and packing, characterized in that it comprises in combination: a rod means (43) for receiving in a first position of it a coil (5) expelled from a rod (3) of the coils forming machine being coaxial and in abutment relationship with it; a means (25) for the lift and transfer, into a second vertical downwards directed position, of the rod means (43) on which the coil is held by friction, said means being capable of being transversally moved in horizontal direction to take up a plurality of positions equidistant between them; below said lifting means (25) a carriage (7) divided into a number of compartments (7C) arranged side by side and in parallel rows, which is movable step by step in longitudinal direction to make the axis of one of the compartments of one row correspond with the axis of the vertically disposed rod means (43); a means (63, 65) for the ejection of the coil - (5) from the rod means (43) to place it in the underlying carriage compartment (7C); means to translate said carriage (7) when a coil has been placed in each of its compartments, below a vertically movable carrier (70) supplied with coils grip means (77A, 77B) for the simultaneous lift of same coils; and carriage means to move said mobile carrier above a stowage container for storing said coils therein.

2) Apparatus according to claim 1, characterized in that the transversal displacements of the means (25) for the lift and displacement of the rod means (43) as well as the step by step movements in longitudinal direction of the carriage (7), are programmed in such a way that a coil is successively placed in each compartment (7C) of the carriage (7) for the complete layers formation.

3) Apparatus according to claim 1 or 2, characterized in that the rod (3) of the coils forming machine and the first position of the rod means (43) for receiving the coils (5) formed and ejected by said machine are horizontal.

4) Apparatus according to claims 1 to 3, characterized in that the means for the lift and displacement of the rod means comprises: a means (49) to rotate the coil being slipped onto the rod means, for the insertion and the blocking, between its turns, of the end "tail" of the roving, by a jet of compressed air or equivalent means; a means - (31) for moving the rod means from the first position to the vertical position and a means (53) for its simultaneous lift above the carriage (7); the means (63, 65) for the downwards ejection of the coil (5) received on the rod means - (43); as well as a means (13) for its own transfer in transversal direction from a position above a row of the carriage compartments to one or more different positions above another or further rows of compartments.

5) Apparatus according to claims 1 and 2, characterized in that said vertically movable carrier (70) is provided with arms (77) having shaped ends to grip the coils (5), being in side by side arrangement, from the outside, said arms (77) being positioned and inclinable so as to determine compressions in the material of the coils to retaine them for the lifting.

6) Apparatus according to claim 5, characterized in that the arms (77) are articulated to the fork-like ends (75E) of hangers (75) projecting from said carrier (70) and are arranged in pairs which correspond and cooperate with each other.

7) Apparatus according to claims 1 and 2, characterized in that the carriage compartments (7C) and the stowage container (71) walls are defined by stanchions (8L, 8T) of limited width and positioned in such a way as to not interfere with the ends of said arms (77) making up the grip means (77A, 77B) of the vertically movable carrier.

8) Apparatus according to claim 1, characterized in that a support, on which said rod is mounted for rotation, is provided with stems apt to encircle the coil and apt to draw the small tail near the coil external surface and make it adhere to the external turns of the coil.

9) Apparatus according to claim 8, characterized in that the control for the rod rotation is so programmed as to dispose the small tail, at the end of rotation, every time at such a position that inside the carriage the "small tails" of the coils will be all substantially placed against the inner columns of the carriage platform.

10) Apparatus according to claim 8, characterized in that the stems are shaped with bevelled i.e. invitation ends.

11) Apparatus according to claim 8, characterized in that the stems may be adjustable for their positioning on a plate of the support of the rotating rod that engages the coil.

12) Apparatus according to claim 1, characterized in that it comprises a piston with a needle for retaining the coil in vertical position during its lowering towards the carriage.

FIG.1

FIG.2

0 194 233

FIG.3

FIG.4

FIG.5

# FIG.6

0 194 233

FIG.7

FIG.8

**FIG.9**

**FIG.10**

**FIG.11**